# EUROPÄISCHE PATENTSCHRIFT

(11) **EP 2 976 226 B1**
(45) Veröffentlichungstag und Bekanntmachung des Hinweises auf die Patenterteilung: **03.05.2017**
(21) Anmeldenummer: 14710206.5
(22) Anmeldetag: 25.02.2014
(51) Int. Cl.: B60J 1/20, B60J 7/00

(54) **ROLLOANORDNUNG MIT SEITENFÜHRUNG**
ROLLER BLIND ARRANGEMENT WITH LATERAL GUIDING
SYSTÈME DE STORE À GUIDAGE LATÉRAL

(30) Priorität: 20.03.2013 DE 102013102838
(43) Veröffentlichungstag der Anmeldung: 27.01.2016
(73) Patentinhaber: Webasto SE, 82131 Stockdorf (DE)
(72) Erfinder: HÖLZEL, Dominik, 82140 Olching (DE); ROCKELMANN, Andreas, 81249 München (DE)
(74) Vertreter: advotec.
(86) Internationale Anmeldenummer: PCT/EP2014/053642
(87) Internationale Veröffentlichungsnummer: WO 2014/146871

(56) Entgegenhaltungen:
- EP-A2- 1 923 245
- WO-A1-2006/012856

## Beschreibung

Die Erfindung betrifft eine Rolloanordnung für ein Kraftfahrzeug zur Abschattung eines transparenten Fahrzeugabschnitts mit den Merkmalen des Oberbegriffs des Patentanspruches 1.

Eine derartige Rolloanordnung ist aus der Praxis bekannt und umfasst eine Rollobahn, die zur Abschattung eines transparenten Dachausschnittes des betreffenden Kraftfahrzeuges von einer Wickeleinrichtung abwickelbar ist bzw. zur Freigabe des transparenten Dachausschnitts auf die Wickeleinrichtung aufwickelbar ist. An einem sich in Fahrzeugquerrichtung erstreckenden Rand ist die Rollobahn an die insbesondere als Wickelwelle ausgebildete Wickeleinrichtung angebunden. An ihren bezogen auf eine vertikale Fahrzeuglängsmittelebene beidseits angeordneten Rändern weist die Rollobahn Führungsbänder auf, die jeweils in einer sich in Fahrzeuglängsrichtung erstreckenden Führungsschiene geführt sind. So kann die Rollobahn in Fahrzeugquerrichtung straff gehalten werden. Zur Betätigung kann die Rolloanordnung einen Antriebsmotor aufweisen, der zwei Triebmittel darstellende Antriebskabel antreibt, die jeweils in einer der Führungsschienen zu einem Zugspriegel geführt sind, der an dem der Wickeleinrichtung abgewandten Rand der Rollobahn angeordnet ist. Die Antriebskabel und die Führungsbänder der Rollobahn erfordern jeweils eigene Führungsbahnen in den Führungsschienen. Dies ist bauraumintensiv. Eine weitere, gattungsbildende Anordnung ist aus EP 1923245 A bekannt. Der Erfindung liegt die Aufgabe zugrunde, eine gemäß der einleitend genannten Gattung ausgeführte Rolloanordnung zu schaffen, die hinsichtlich des erforderlichen Bauraums optimiert ausgeführt ist.

Diese Aufgabe ist erfindungsgemäß durch die Rolloanordnung nach Patentanspruch 1 gelöst.

Der Kern der Erfindung besteht mithin darin, dass die zumindest eine ebene Fläche zur Anbindung an die Rollobahn aufweisenden Triebmittel nicht nur zur Betätigung der Rolloanordnung, sondern auch zur Seitenführung der Rollobahn genutzt werden, und zwar in einer Art und Weise, dass die Triebmittel bzw. Zahnriemen innerhalb der Führungsschienen jeweils nur über die ebene Fläche an der Rollobahn anliegen bzw. an dieser fixiert sind. In den Führungsschienen wird also die Rollobahn direkt von dem jeweiligen Zahnriemen mitgenommen. Außerhalb der Führungsschienen ist die Verbindung zwischen den Zahnriemen und der Rollobahn aufgehoben, da sich dort die Rollobahn von den Zahnriemen trennt. Damit kann der Stoff der Rollobahn frei zu einem Rollowickel aufgewickelt werden. Die Zahnriemen laufen hingegen separat ohne Anbindung an die Rollobahn in ihrer jeweiligen Führung und können umlaufend wie herkömmliche Antriebskabel für Rolloanordnungen geführt sein.

Bei der Rolloanordnung nach der Erfindung kann der Rollowickel, den die Rollobahn auf einer Wickeleinrichtung oder auch ohne zusätzliche Wickeleinrichtung bildet, einen kleinen Durchmesser aufweisen. Durch die kombinierte Nutzung der Triebmittel zur Betätigung der Rollobahn und zur Seitenführung der Rollobahn kann der erforderliche Bauraum im Bereich der Führungsschienen klein gehalten werden. Auch kann die Führung und der Antrieb der Rollobahn mit einer geringen Zahl an Teilen realisiert werden.

Die Rolloanordnung nach der Erfindung kann in Verbindung mit einem Dachöffnungssystem, bei einem transparenten Festdach eines Kraftfahrzeugs oder auch bei sonstigen transparenten Fahrzeugabschnitten zum Einsatz kommen.

Bei einer speziellen Ausführungsform der Rolloanordnung nach der Erfindung läuft die Rollobahn in Rolloquerrichtung, das heißt quer zur Erstreckung der Führungsschienen, umlenkungsfrei von dem Rollowickel in die Führungsschienen ein. Innerhalb der Führungsschienen wird dann die Verbindung zwischen der Rollobahn und den Zahnriemen hergestellt. Damit sind auch keine gegebenenfalls bauraumintensiven Vorrichtungen erforderlich, die eine gesteuerte Umlenkung der Rollobahn realisieren könnten. Vielmehr kann durchgängig zwischen Rollowickel und dem Zugspriegel ein einheitlicher Querschnitt der Rollobahn realisiert werden.

Um die Anbindung der Rollobahn an die Triebmittel reversibel gestalten zu können und auch eine hohe Zahl von Betätigungszyklen, das heißt eine lange Lebensdauer der Rolloanordnung gewährleisten zu können, sind die Triebmittel bei einer bevorzugten Ausführungsform der Rolloanordnung nach der Erfindung jeweils an der an die Rollobahn angebundenen ebenen Fläche als Stoppel-, Klett-, Haken- oder Pilzband ausgebildet, das innerhalb der betreffenden Führungsschiene an der aus einem blickdichten oder zumindest teilweise transparenten Material gebildeten Rollobahn fixiert ist. Innerhalb der Führungsschienen sind damit die Triebmittel jeweils mit dem Material bzw. Stoff der Rollobahn verklettet bzw. verhakt, wohingegen die Triebmittel und die Rollobahn außerhalb der Führungsschienen mit Abstand zueinander geführt sind und damit voneinander getrennt werden. Unter einem Stoppelband ist ein Band zu verstehen, das an seiner Oberfläche eine Vielzahl feiner Borsten bzw. Stoppel aufweist, die zur Anbindung an die Rollobahn in deren Material eingreifen können. Die Stoppel sind durchgängig gerade ausgebildet.

Die als Stoppel-, Klett-, Haken- oder Pilzband ausgebildete Fläche ist beispielsweise an der der Verzahnung abgewandten Seite des betreffenden Triebmittels angeordnet, das vorzugsweise einen zumindest annähernd rechteckigen Querschnitt aufweist.

Die als Stoppel-, Klett-, Haken- oder Pilzband ausgebildete Fläche kann einstückig aus dem gleichen Material und/oder durch Koextrusion mit dem jeweiligen Triebmittel hergestellt sein. Alternativ ist es aber auch denkbar, dass die als Stoppel-, Klett-, Haken- oder Pilzband ausgebildete, ebene Fläche aus einem auf das betreffende Triebmittel geklebten oder geschweißten Band gebildet ist.

In Abhängigkeit von dem Material, aus dem die Rollobahn gefertigt ist, kann die als Stoppel-, Klett-, Haken- oder Pilzband ausgebildete, ebene Fläche des Triebmittels direkt mit dem Material der Rollobahn verbunden bzw. verklettet werden.

Insbesondere bei einem nicht verklettbaren bzw. verhakbaren Material, wie einer Folie oder Plane, kann die Rollobahn der Rolloanordnung nach der Erfindung an ihren bezogen auf die vertikale Rollolängsmittelebene seitlichen Rändern jeweils ein Führungsband aufweisen, das mit einem Zentralabschnitt der Rollobahn verbunden ist und das zumindest einen als Flausch- oder Velourband ausgebildeten Abschnitt aufweist, der mit der jeweiligen, als Stoppel-, Klett-, Haken- oder Pilzband ausgebildeten Fläche des betreffenden Antriebskabels zusammenwirkt. Die Führungsbänder der Rollobahn können dann ein standardisiertes Stoffmodul sein, das unabhängig von dem die Sichtfläche der Rollobahn bildenden Material bei Rolloanordnungen nach der Erfindung eingesetzt werden kann. Damit können stets die gleichen Reibparameter innerhalb der vorzugsweise ebenfalls standardisiert ausgebildeten Führungsschienen realisiert werden.

Um eine möglichst große Haftfläche zwischen den Triebmitteln und der Rollobahn bereitzustellen, kann es zweckmäßig sein, dass die Triebmittel zwischen der Antriebseinrichtung und den Führungsschienen bezogen auf ihre Längsachse jeweils mittels einer Torsionseinrichtung um etwa 90° tordiert werden. Dies kann insbesondere erforderlich sein, wenn die Achse des Antriebsritzels der Antriebseinrichtung rechtwinkelig zur Ebene der ausgezogenen Rollobahn steht und die mit der Rollobahn zu verbindenden, ebenen Flächen der Triebmittel an der der Verzahnung abgewandten Seite der Triebmittel angeordnet sind.

Die Torsionseinrichtungen für die Triebmittel können insbesondere in einen Rahmen der Rolloanordnung integriert sein. Eine besonders einfach zu realisierende Torsionseinrichtung besteht darin, diese als Führungsrohr auszubilden, dessen Innenquerschnitt mit demjenigen des betreffenden Triebmittels korrespondiert. Das Führungsrohr ist dann also ebenfalls bezüglich seiner Längsachse tordiert bzw. schraubenartig ausgebildet.

Weitere Vorteile und vorteilhafte Ausgestaltungen des Gegenstandes der Erfindung sind der Beschreibung, der Zeichnung und den Patentansprüchen entnehmbar.

Ausführungsbeispiele eines Rolloanordnung nach der Erfindung sind in der Zeichnung schematisch vereinfacht dargestellt und werden in der nachfolgenden Beschreibung näher erläutert. Es zeigt:
- Figur 1: eine schematische Draufsicht auf ein Dach eines Kraftfahrzeuges mit einer Rolloanordnung nach der Erfindung;
- Figur 2: eine Draufsicht auf die Rolloanordnung in Alleinstellung;
- Figur 3: einen Schnitt durch die Rolloanordnung entlang der Linie III-III in Figur 2; und
- Figur 4: einen Figur 3 entsprechenden Schnitt, jedoch für eine alternative Ausführungsform.

In der Zeichnung ist ein Fahrzeugdach 10 eines ansonsten nicht näher dargestellten Personenkraftwagens dargestellt, das einen Dachausschnitt 12 aufweist, welcher mittels eines hier nicht näher dargestellten, transparenten Deckelelements eines Dachöffnungssystems geschlossen oder zumindest teilweise freigegeben werden kann.

Zur Abschattung des Dachausschnittes 12 umfasst das Fahrzeugdach 10 eine Rolloanordnung 14, die eine Rollobahn 16 aus einem faltbaren bzw. wickelbaren Stoff umfasst.

An ihrer freien Stirnseite weist die Rollobahn 16 einen sich in Fahrzeugquerrichtung erstreckenden Zugspriegel 18 auf. An ihrem dem Zugspriegel 18 abgewandten Rand ist die Rollobahn 16 an einer sich in Fahrzeugquerrichtung erstreckenden Wickelwelle 20 befestigt. Die Wickelwelle 20 umfasst ein drehbar gelagertes Wickelrohr, das mittels einer hier nicht näher dargestellten Wickelfeder in Aufwickelrichtung der Rollobahn 16 vorgespannt ist, so dass sich die Rollobahn 16 bei Freigabe des Zugspriegels 18 bzw. bei einem entsprechenden Verfahren des Zugspriegels 18 in Richtung der Wickelwelle 20 selbsttätig auf der Wickelwelle 20 zu einem Rollowickel aufwickelt.

Zur Führung des Zugspriegels 18 und zur seitlichen Führung der Rollobahn 16 weist die Rolloanordnung 14 bezogen auf eine vertikale Fahrzeuglängsmittelebene beidseits jeweils eine Führungsschiene 22A bzw. 22B auf, die sich in Fahrzeuglängsrichtung bzw. in Ausziehrichtung der Rollobahn 16 entlang des betreffenden seitlichen Randes des Dachausschnitts 12 erstreckt. Die Führungsschienen 22A und 22B können Bestandteil des Dachöffnungssystems sein oder auch nur der Rolloanordnung 14 zugeordnet sein.

Zur Betätigung weist die Rolloanordnung 14 einen elektrischen Antriebsmotor 24 auf, der ein Antriebsritzel 26 antreibt, dessen Achse rechtwinkelig zur Ebene eines ausgezogenen Abschnitts der Rollobahn 16 steht. Zur Kraftübertragung steht das Antriebsritzel 26 mit zwei Triebmitteln bzw. Antriebskabeln 28A bzw. 28B in Eingriff, die jeweils als Kunststoffzahnriemen ausgebildet sind. Die Triebmittel 28A und 28B sind jeweils über eine Führungseinrichtung 40A bzw. 40B in einen Führungskanal 30 der betreffenden Führungsschiene 22A bzw. 22B und in diesem zu dem Zugspriegel 18 geführt und an diesen angebunden.

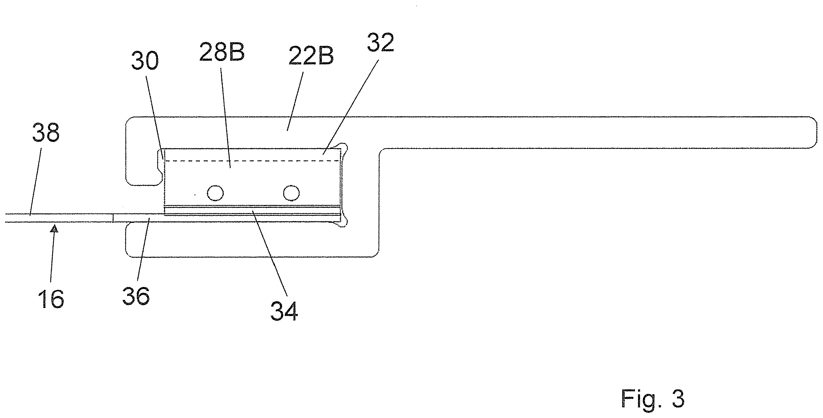

Die Triebmittel 28A und 28B haben, wie Figur 3 zu entnehmen ist, jeweils einen zumindest weitgehend rechteckigen Querschnitt und sind jeweils an einer Seite mit einer Verzahnung 32 versehen, die mit dem Antriebsritzel 26 in Eingriff steht. An der der Verzahnung 32 abgewandten Seite, die eine zumindest weitgehend ebene Fläche darstellt, sind die Triebmittel 28A und 28B jeweils als Stoppel-, Klett-, Haken- oder Pilzband 34 ausgebildet bzw. mit einem derartigen Band versehen, das innerhalb der betreffenden Führungsschiene 22A bzw. 22B bzw. innerhalb der betreffenden Führungskanal 30 von oben auf der Rollobahn 16 aufliegt und an dem Material der Rollobahn 16 verhakt ist. Damit ist die Rollobahn 16 zwischen den beiden Führungsschienen 22A und 22B in Fahrzeugquerrichtung gespannt. Die Rollobahn 16 ist zur Verhakung des jeweiligen Stoppel-, Klett-, Haken- oder Pilzbandes 34 in seinen seitlichen Randbereichen jeweils mit einem ein Textilmodul darstellenden Führungsband 36 versehen, das mit einem Zentralabschnitt 38 der Rollobahn vernäht ist und ein Flausch- oder Velourband darstellen kann. Der Zentralabschnitt 38 besteht aus einem blickdichten Material, das zur Verhakung bzw. Verklettung mit den Triebmitteln 28A und 28B ungeeignet ist.

Die Triebmittel 28A und 28B haben also jeweils zwei Funktionsflächen, nämlich eine, die die Verzahnung 32 aufweist, und eine, die mit dem Stoppel-, Klett-, Haken- oder Pilzband 34 ausgebildet ist.

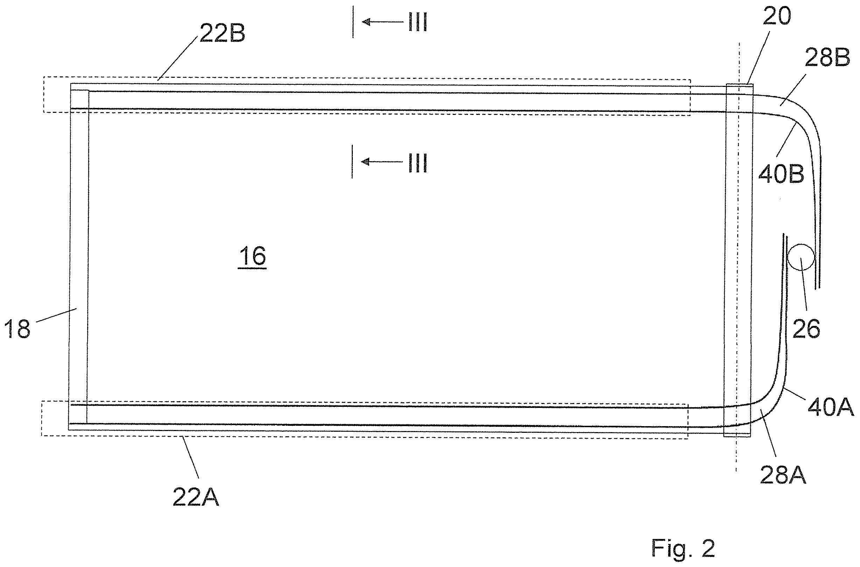

In einem zwischen den Führungsschienen 22A und 22B und dem Antriebsritzel 26 des Antriebsmotors 24 angeordneten Abschnitt sind die Triebmittel 28A und 28B von der Rollobahn 16 gelöst, so dass diese sich glatt auf die Wickelwelle 20 aufwickeln kann. Wie Figur 2 zu entnehmen ist, läuft die Rollobahn ausgehend von der Wickelwelle 20 umlenkungsfrei, das heißt glatt und eben in die Führungsschienen 22A und 22B ein. Das Lösen der Triebmittel 28A und 28B von der Rollobahn 16 wird dadurch erreicht, dass sie außerhalb der Führungsschienen 22A und 22B, das heißt in Figur 2 in dem rechten von den Führungsschienen 22A und 22B angeordneten Bereich in Fahrzeughochrichtung auf Abstand gehalten werden bzw. von der Rollobahn 16 weg geführt werden, wohingegen die Rollobahn 16 innerhalb der Führungsschienen 22A und 22B gegen die Triebmittel 28A und 28B gepresst wird, so dass sich die seitlichen Führungsbänder 36 mit dem jeweiligen Stoppel-, Klett-, Haken- oder Pilzband 34 verhaken können.

Die Triebmittel 28A und 28B erfahren zwischen dem Antriebsritzel 26 des Antriebsmotors 24 und der jeweiligen Führungsschiene 22A bzw. 22B eine Torsion um 90° bezogen auf die jeweilige Längsachse, so dass die jeweilige Verzahnung 32 oben liegt und die Triebmittel 28A und 28B von oben auf der Rollobahn 16 aufliegen. Die Torsion erfolgt jeweils mittels der eine Torsionseinrichtung darstellenden Führungseinrichtung 40A bzw. 40B, die in einen nicht näher dargestellten Rahmen der Rolloanordnung 14 integriert ist und aus einem Führungsrohr besteht, dessen Innenquerschnitt mit demjenigen des betreffenden Triebmittels 28A bzw. 28B korrespondiert. Die Führungseinrichtungen 40A und 40B sind mithin jeweils aus einem um seine Achse tordierten, gebogenen Rohr gebildet.

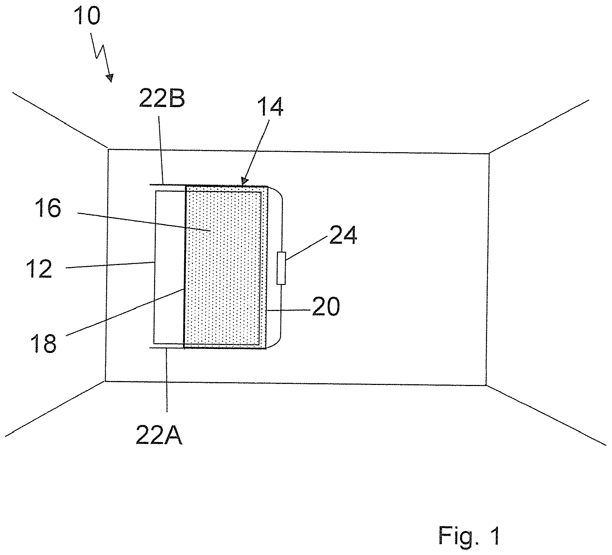

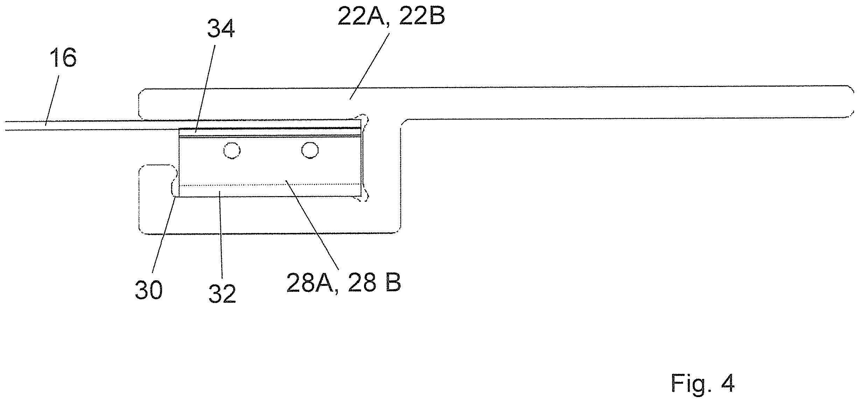

In Figur 4 ist ein seitlicher Führungsabschnitt einer alternativen Ausführungsform einer Rolloanordnung nach der Erfindung dargestellt. Diese Rolloanordnung entspricht weitgehend derjenigen nach den Figuren 1 bis 3, unterscheidet sich von dieser aber dadurch, dass die Rollobahn 16 innerhalb der Führungskanäle 30 der Führungsschienen 22A und 22B von oben auf die als Kunststoffzahnriemen ausgebildeten Triebmittel 28A, 28B gepresst und dort mittels eines Stoppel-, Klett-, Haken- oder Pilzbandes 34 gehalten ist, das entsprechend der oben beschriebenen Ausführungsform mit dem jeweiligen Triebmittel 28A bzw. 28B koextrudiert ist oder ein aufgeklebtes Band darstellt. Im Übrigen entspricht die Rolloanordnung, deren Führungsabschnitt in Figur 4 dargestellt ist, der in den Figuren 1 bis 3 dargestellten Rolloanordnung.

### Bezugszeichenliste

- 10: Fahrzeugdach
- 12: Dachausschnitt
- 14: Rolloanordnung
- 16: Rollobahn
- 18: Zugspriegel
- 20: Wickelwelle
- 22A, B: Führungsschiene
- 24: Antriebsmotor
- 26: Antriebsritzel
- 28A, B: Triebmittel
- 30: Führungskanal
- 32: Verzahnung
- 34: Stoppel-, Klett-, Haken- oder Pilzband
- 36: Führungsband
- 38: Zentralabschnitt
- 40A, B: Führungseinrichtung

## Patentansprüche

1. Rolloanordnung für ein Kraftfahrzeug zur Abschattung eines transparenten Fahrzeugabschnitts, umfassend eine Rollobahn (16), die zu einem Rollowickel aufwickelbar ist und an ihren bezogen auf eine vertikale Rollolängsmittelebene seitlichen Rändern jeweils in einer Führungsschiene (22A, 22B) geführt ist, sowie eine Antriebseinrichtung (24) mit einem Antriebsritzel (26), das zwei Triebmittel (28A, 28B) antreibt, die jeweils in einer der Führungsschienen (22A, 22B) geführt sind, **dadurch gekennzeichnet, dass** die Triebmittel (28A, 28B) jeweils als Zahnriemen mit einer Verzahnung (32) ausgebildet sind, der zumindest eine ebene Fläche zur Kopplung mit der Rollobahn (16) aufweist, und dass die Triebmittel (28A, 28B) innerhalb der Führungsschienen (22A, 22B) jeweils allein über ihre jeweilige ebene Fläche an die Rollobahn (16) angebunden sind und in einem zwischen den Führungsschienen (22A, 22B) und dem Rollowickel angeordneten Abschnitt von der Rollobahn (16) gelöst sind.

2. Rolloanordnung nach Anspruch 1, **dadurch gekennzeichnet, dass** die Rollobahn (16) in Rolloquerrichtung umlenkungsfrei von dem Rollowickel (20) in die Führungsschienen (22A, 22B) einläuft.

3. Rolloanordnung nach Anspruch 1 oder 2, **dadurch gekennzeichnet, dass** die Triebmittel (28A, 28B) jeweils an der an die Rollobahn (16) angebundenen, ebenen Fläche als Stoppel-, Klett-, Haken- oder Pilzband (34) ausgebildet sind, das innerhalb der betreffenden Führungsschiene (22A, 22B) an der Rollobahn (16) fixiert ist.

4. Rolloanordnung nach Anspruch 3, **dadurch gekennzeichnet, dass** die als Stoppel-, Klett-, Haken- oder Pilzband (34) ausgebildete Fläche an der der Verzahnung (32) abgewandten Seite des betreffenden Triebmittels (28A, 28B) angeordnet ist.

5. Rolloanordnung nach Anspruch 3 oder 4, **dadurch gekennzeichnet, dass** die als Stoppel-, Klett-, Haken- oder Pilzband (34) ausgebildete Fläche einstückig aus dem gleichen Material und/oder durch Koextrusion mit dem jeweiligen Triebmittel (28A, 28B) hergestellt ist.

6. Rolloanordnung nach einem der Ansprüche 3 bis 5, **dadurch gekennzeichnet, dass** die als Stoppel-, Klett-, Haken- oder Pilzband (34) ausgebildete Fläche aus einem aufgeklebten oder aufgeschweißten Band gebildet ist.

7. Rolloanordnung nach einem der Ansprüche 3 bis 6, **dadurch gekennzeichnet, dass** die Rollobahn (16) an ihren bezogen auf die vertikale Rollolängsmittelebene seitlichen Rändern jeweils ein Führungsband (36) aufweist, das mit einem Zentralabschnitt (38) der Rollobahn verbunden ist und das zumindest einen als Flausch- oder Velourband ausgebildeten Abschnitt aufweist, der innerhalb der jeweiligen Führungsschiene (22A, 22B) mit der jeweiligen, als Stoppel-, Klett-, Haken- oder Pilzband (34) ausgebildeten Fläche des betreffenden Triebmittels (28A, 28B) zusammenwirkt.

8. Rolloanordnung nach einem der Ansprüche 1 bis 7, **dadurch gekennzeichnet, dass** die Triebmittel (28A, 28B) einen zumindest annähernd rechteckigen Querschnitt aufweisen, wobei die ebene Fläche zur Kopplung mit der Rollobahn (16) vorzugsweise jeweils an der der Verzahnung (32) abgewandten Seite des jeweiligen Triebmittels (28A, 28B) angeordnet ist.

9. Rolloanordnung nach einem der Ansprüche 1 bis 8, **dadurch gekennzeichnet, dass** die Triebmittel (28A, 28B) jeweils zu einem Zugspriegel (18) geführt sind, der an dem dem Rollowickel abgewandten Rand der Rollobahn (16) angeordnet ist.

10. Rolloanordnung nach einem der Ansprüche 1 bis 9, **dadurch gekennzeichnet, dass** der Rollowickel auf einer Wickeleinrichtung (20) für die Rollobahn (16) gebildet ist.

11. Rolloanordnung nach einem der Ansprüche 1 bis 10, **dadurch gekennzeichnet, dass** die Triebmittel (28A, 28B) zwischen der Antriebseinrichtung (26) und den Führungsschienen (22A, 22B) bezogen auf ihre Längsachse jeweils mittels einer Führungseinrichtung (40A, 40B) um etwa 90° tordiert werden.

12. Rolloanordnung nach Anspruch 11, **dadurch gekennzeichnet, dass** die Führungseinrichtungen (40A, 40B) in einem Rahmen der Rolloanordnung integriert sind.

13. Rolloanordnung nach Anspruch 11 oder 12, **dadurch gekennzeichnet, dass** die Führungseinrichtungen (40A, 40B) jeweils als Führungsrohr ausgebildet sind, dessen Innenquerschnitt mit demjenigen des betreffenden Triebmittels (28A, 28B) korrespondiert.

## Claims

1. A roller blind arrangement for a motor vehicle for shading a transparent vehicle section, comprising a roller blind web (16) which can be wound up to form a roller blind winding and is guided at its lateral edges in relation to a vertical longitudinal center plane of the roller blind each in a guide rail (22A, 22B), as well as a drive device (24) having a drive pinion (26), which drives two driving means (28A, 28B), which are each guided in one of the guide rails (22A, 22B), **characterized in that** the driving means (28A, 28B) are each designed as a toothed belt having a toothing (32), said toothed belt having at least one flat surface for coupling to the roller blind web (16), and **in that** the driving means (28A, 28B) are joined within the guide rails (22A, 22B) to the roller blind web (16) in each case solely via their respective flat surfaces and are detached from the roller blind web (16) in a section arranged between the guide rails (22A, 22B) and the roller blind winding.

2. The roller blind arrangement according to claim 1, **characterized in that** the roller blind web (16) is fed into the guide rails (22A, 22B) from the roller blind winding (20) in the transverse direction of the roller blind without any deflection.

3. The roller blind arrangement according to claim 1 or 2, **characterized in that** the driving means (28A, 28B) are each designed, at the flat surface being joined to the roller blind web (16), as a stubble strap, hook-and-loop strap, hook strap or mushroom-type strap (34), which is fixed to the roller blind web (16) within the respective guide rail (22A, 22B).

4. The roller blind arrangement according to claim 3, **characterized in that** the surface designed as a stubble strap, hook-and-loop strap, hook strap or mushroom-type strap (34) is arranged at the side of the relevant driving means (28A, 28B) facing away from the toothing (32).

5. The roller blind arrangement according to claim 3 or 4, **characterized in that** the surface being designed as a stubble strap, hook-and-loop strap, hook strap or mushroom-type strap (34) has been produced in one piece from the same material and/or by way of coextrusion with the respective driving means (28A, 28B).

6. The roller blind arrangement according to any one of the claims 3 to 5, **characterized in that** the surface being designed as a stubble strap, hook-and-loop strap, hook strap or mushroom-type strap (34) has been formed from a strap that has been glued on or welded on.

7. The roller blind arrangement according to any one of the claims 3 to 6, **characterized in that** the roller blind web (16) has one guide strap (36) in each case at its lateral edges in relation to the vertical longitudinal center plane of the roller blind, said guide strap (36) being connected to a central section (38) of the roller blind web and having at least one section being designed as a loop strap or velour strap and interacting with the respective surface of the relevant driving means (28A, 28B) within the respective guide rail (22A, 22B), said surface being designed as a stubble strap, hook-and-loop strap, hook strap or mushroom-type strap (34).

8. The roller blind arrangement according to any one of the claims 1 to 7, **characterized in that** the driving means (28A, 28B) have an at least nearly rectangular cross section, wherein the flat surface for coupling to the roller blind web (16) is preferably in each case arranged at the side of the respective driving means (28A, 28B) that faces away from the toothing (32).

9. The roller blind arrangement according to any one of the claims 1 to 8, **characterized in that** the driving means (28A, 28B) are each guided to a tension bow (18), which is arranged at the edge of the roller blind web (16) that faces away from the roller blind winding.

10. The roller blind arrangement according to any one of the claims 1 to 9, **characterized in that** the roller blind winding is formed on a winding device (20) for the roller blind web (16).

11. The roller blind arrangement according to any one of the claims 1 to 10, **characterized in that** the driving means (28A, 28B) are each twisted between the driving device (26) and the guide rails (22A, 22B) by approximately 90° in relation to a longitudinal axis by means of a guide device (40A, 40B).

12. The roller blind arrangement according to claim 11, **characterized in that** the guide devices (40A, 40B) are integrated in a frame of the roller blind arrangement.

13. The roller blind arrangement according to claim 11 or 12, **characterized in that** the guide devices (40A, 40B) are each designed as a guide tube, whose inner cross section corresponds to the cross section of the respective driving means (28A, 28B).

## Revendications

1. Ensemble de store pour une véhicule pour ombrager une zone de véhicule transparente, comprenant une bande de store (16), qui peut être enroulée à un store à enrouleur et qui est guidée dans un rail de guidage (22A, 22B) par chaque ses bords latéraux relatif à une plane centrale longitudinale verticale de store, ainsi qu'un dispositif d'entraînement (24) ayant un pignon d'entraînement (26), qui entraîne deux moyens d'entraînement (28A, 28B), qui sont chacun guidés dans un des rails de guidage (22A, 22B), **caractérisé en ce que** les moyens d'entraînement (28A, 28B) sont chacun formés comme des courroies dentées ayant une denture (32), qui comprend au moins une surface plane pour être coupler à la bande de store (16), et que les moyens d'entraînement (28A, 28B) sont chacun liés à la bande de store (16) dans le rail de guidage (22A, 22B) seulement via sa surface plane respective et sont déliés de la store de bande (16) dans une zone disposée entre les rails de guidage (22A, 22B) et le store d'enrouleur.

2. Ensemble de store selon la revendication 1, **caractérisé en ce que** la bande de store (16) entre dans le rail de guidage (22A, 22B) du store d'enrouleur (20) sans déviation en direction transversale de store.

3. Ensemble de store selon la revendication 1 ou 2, **caractérisé en ce que** les moyens d'entraînement (28A, 28B) sont chacun formé, à la surface plane liée à la bande de store (16), comme une bande à chaume, une bande à boucles et à crochets, une bande crochet ou une bande de champignon (34), qui est fixée à la bande de store (16) dans le rail de guidage (22A, 22B) respective.

4. Ensemble de store selon la revendication 3, **caractérisé en ce que** la surface formée comme une bande à chaume, une bande à boucles et à crochets, une bande crochet ou une bande de champignon (34) est disposée au côté des moyens d'entraînement (28A, 28B) respective détourné de la denture (32).

5. Ensemble de store selon la revendication 3 ou 4, **caractérisé en ce que** la surface formée comme une bande à chaume, une bande à boucles et à crochets, une bande crochet ou une bande de champignon (34) est produite d'une pièce du même matériau et/ou produite par co-extrusion avec les moyens d'entraînement (28A, 28B) respectifs.

6. Ensemble de store selon l'une quelconque des revendications 3 à 5, **caractérisé en ce que** la surface formée comme une bande à chaume, une bande à boucles et à crochets, une bande crochet ou une bande de champignon (34) est fait d'une bande y collée ou soudée.

7. Ensemble de store selon l'une quelconque des revendications 3 à 6, **caractérisé en ce que** la bande de store (16) comprend une bande de guidage (36) à chaque ses bords latéraux relatif à une plane centrale longitudinale verticale de store, ladite bande de guidage (36) étant liée avec une zone centrale (38) de la bande de store et comprenant au moins une zone formée comme une bande à boucles ou une bande de velours, ladite zone interagissant avec la zone respective formée comme une bande à chaume, une bande à boucles et à crochets, une bande crochet ou une bande de champignon (34) des moyens d'entraînement (28A, 28B) respectifs dans le rail de guidage (22A, 22B) respectif.

8. Ensemble de store selon l'une quelconque des revendications 1 à 7, **caractérisé en ce que** les moyens d'entraînement (28A, 28B) comprend une section transversale rectangulaire, ladite surface plane pour coupler avec la bande de store (16) étant disposée préférablement à chaque surface des moyens d'entraînement (28A, 28B) respectifs détournée de la denture (32).

9. Ensemble de store selon l'une quelconque des revendications 1 à 8, **caractérisé en ce que** les moyens d'entraînement (28A, 28B) sont chacun guidés à une tige de tension (18), qui est disposée au bord de bande de store détourné du store à enrouleur.

10. Ensemble de store selon l'une quelconque des revendications 1 à 9, **caractérisé en ce que** le store à enrouleur est formé sur un dispositif d'enroulement (20) pour la bande de store (16).

11. Ensemble de store selon l'une quelconque des revendications 1 à 10, **caractérisé en ce que** les moyens d'entraînement (28A, 28B) sont chacun tournés entre le dispositif d'entraînement (26) et les rails de guidage (22A, 22B) au moyen d'un dispositif de guidage (40A, 40B) par 90° relatif à son axe longitudinal.

12. Ensemble de store selon la revendication 11, **caractérisé en ce que** les dispositifs de guidage (40A, 40B) sont intégrés dans un cadre de l'ensemble de store.

13. Ensemble de store selon la revendication 11 ou 12, **caractérisé en ce que** les dispositifs de guidage (40A, 40B) sont chacun formés comme un tuyau de guidage, dont section transversale intérieure correspond à la section transversale des moyens d'entraînement (28A, 28B) respectifs.
